# EUROPEAN PATENT APPLICATION

(11) **EP 4 624 736 A1**
(43) Date of publication of application: **01.10.2025**
(21) Application number: 25166757.2
(22) Date of filing: 27.03.2025
(51) Int. Cl.: F02C 7/268, F02C 7/36

(54) **ELECTRIC COMPRESSOR STAGE FOR A GAS TURBINE ENGINE**

(30) Priority: 27.03.2024 US 202418618761
(71) Applicant: RTX Corporation, Farmington, CT 06032 (US)
(72) Inventor: BEESON, William, San Diego, 92107 (US)
(74) Representative: Dehns

(57) **Abstract**

A gas turbine engine (200) includes a compressor section (104), a turbine section (108), a low-speed shaft (110), a high-speed shaft (112), an electric compressor stage shaft (113), and an electric motor (128). The compressor section (104) includes a low-pressure compressor (116), a high-pressure compressor (122), and an electric compressor stage (132). The turbine section (108) includes a low-pressure turbine (118) and a high-pressure turbine (124). The low-speed shaft (110) interconnects the low-pressure compressor (116) and the low-pressure turbine (118). The high-speed shaft (112) interconnects the high-pressure compressor (122) and the high-pressure turbine (124). The electric compressor stage shaft (113) connects to the electric compressor stage (132). The electric motor (128) is configured to drive the electric compressor stage shaft (113).

## Description

### TECHNICAL FIELD

This invention relates generally to gas turbine engine devices and processes. More specifically, this invention relates to an electric compressor stage for a gas turbine engine.

### BACKGROUND

Commercial aircraft generally use air-turbine starters for larger engines and electric starters for smaller engines. Air-turbine starters sometimes use pneumatic power provided by an auxiliary power unit (APU) or a ground cart to run a pressure turbine and gear box to turn the shafts of the engine. Electric starters use electric power provided by the APU or the ground cart to run an electric motor gear box and turn the shaft of the engine. Air turbine starters can take a longer period of time to start engine operation, while electric starters may not have enough torque to start a large gas turbine.

### SUMMARY

According to an aspect of the present invention, there is provided a gas turbine engine that includes a compressor section, a turbine section, a low-speed shaft, a high-speed shaft, an electric compressor stage e shaft, and an electric motor. The compressor section includes a low-pressure compressor, a high-pressure compressor, and an electric compressor stage. The turbine section includes a low-pressure turbine and a high-pressure turbine. The low-speed shaft interconnects the low-pressure compressor and the low-pressure turbine. The high-speed shaft interconnects the high-pressure compressor and the high-pressure turbine. The electric compressor stage shaft connects to the electric compressor stage. The electric motor is configured to drive the electric compressor stage shaft.

According to another aspect of the present invention, there is provided a gas turbine engine that includes a compressor section, a turbine section, a low-speed shaft, a high-speed shaft, an electric compressor stage shaft, and an electric motor. The compressor section includes a high-pressure compressor and a low-pressure compressor, where the low-pressure compressor includes a first low-pressure compression stage and at least one additional low-pressure compression stage. The turbine section includes a low-pressure turbine and a high-pressure turbine. The low-speed shaft interconnects the at least one additional low-pressure compression stage and the low-pressure turbine. The high-speed shaft interconnects the high-pressure compressor and the high-pressure turbine. The electric compressor stage shaft connects to the first low-pressure compression stage. The electric motor is configured to drive the electric compressor stage shaft.

According to another aspect of the present invention, there is provided a method that includes interconnecting a low-pressure compressor and a low-pressure turbine using a low-speed shaft. The method also includes interconnecting a high-pressure compressor and a high-pressure turbine using a high-speed shaft. The method further includes connecting an electric compressor stage to a electric compressor stage shaft. In addition, the method includes driving the electric compressor stage shaft using an electric motor.

Optionally, and in accordance with any of the above, the electric compressor stage shaft is decoupled from the low-pressure compressor.

Optionally, and in accordance with any of the above, the electric compressor stage shaft is decoupled from the high-pressure compressor.

Optionally, and in accordance with any of the above, the gas turbine engine further comprises a fan connected to the electric compressor stage shaft.

Optionally, and in accordance with any of the above, the gas turbine engine further comprises a gear box connected to the low-speed shaft and the fan via the electric compressor stage shaft.

Optionally, and in accordance with any of the above, the gear box is configured to switch between (i) the electric motor driving the electric compressor stage shaft and (ii) the low-speed shaft driving the electric compressor stage shaft.

Optionally, and in accordance with any of the above, the electric motor does not drive the low-speed shaft and the high-speed shaft.

Optionally, and in accordance with any of the above, the electric compressor stage shaft is decoupled from the second low-pressure compression stage.

Optionally, and in accordance with any of the above, the electric compressor stage shaft is decoupled from the high-pressure compressor.

Optionally, and in accordance with any of the above, the gas turbine engine further comprises a fan connected to the electric compressor stage shaft.

Optionally, and in accordance with any of the above, the gas turbine engine further comprises a gear box connected to the low-speed shaft and the fan via the electric compressor stage shaft.

Optionally, and in accordance with any of the above, the gear box is configured to switch between (i) the electric motor driving the electric compressor stage shaft and (ii) the low-speed shaft driving the electric compressor stage shaft.

Optionally, and in accordance with any of the above, the electric motor does not drive the low-speed shaft or the high-speed shaft.

Optionally, and in accordance with any of the above, the electric compressor stage shaft is decoupled from the low-pressure compressor or the high-pressure compressor.

Optionally, and in accordance with any of the above, the method of further comprises connecting a fan to the electric compressor stage shaft.

Optionally, and in accordance with any of the above, the method of further comprises connecting a gear box to the low-speed shaft and the fan via the electric compressor stage shaft.

Optionally, and in accordance with any of the above, the method of further comprises switching the gear box between (i) the electric motor driving the electric compressor stage shaft and (ii) the low-speed shaft driving the electric compressor stage shaft.

Optionally, and in accordance with any of the above, the electric motor does not drive the low-speed shaft and the high-speed shaft.

Other technical features may be readily apparent to one skilled in the art from the following figures, descriptions, and claims.

### BRIEF DESCRIPTION OF THE DRAWINGS

For a more complete understanding of this invention, reference is made to the following description, taken in conjunction with the accompanying drawings, in which:
FIGURE 1 illustrates an example gas turbine engine in accordance with this invention;
FIGURE 2 illustrates an example hybrid gas turbine-electric engine in accordance with this invention; and
FIGURE 3 illustrates an example method for operating a hybrid gas turbine-electric engine according to this invention.

### DETAILED DESCRIPTION

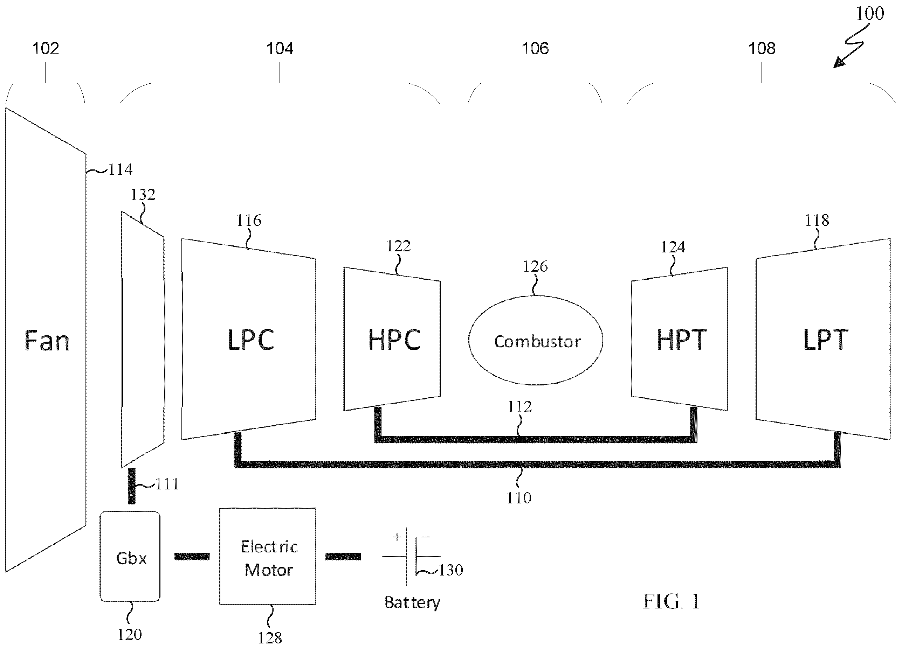

FIGURES 1 through 3, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

As described above, air turbine starters can take a longer period of time to start engine operation, while electric turbine starters may not have enough torque to start a large gas turbine. A turbine or hybrid electric turbine engine can increase efficiency and decrease weight with alternative methods of engine starting. Adding a separate electric stage compressor or using a separate stage of a low-pressure compressor as an electric stage can reduce the start time of a gas turbine while not having to experience the torque loss of using only an electric motor.

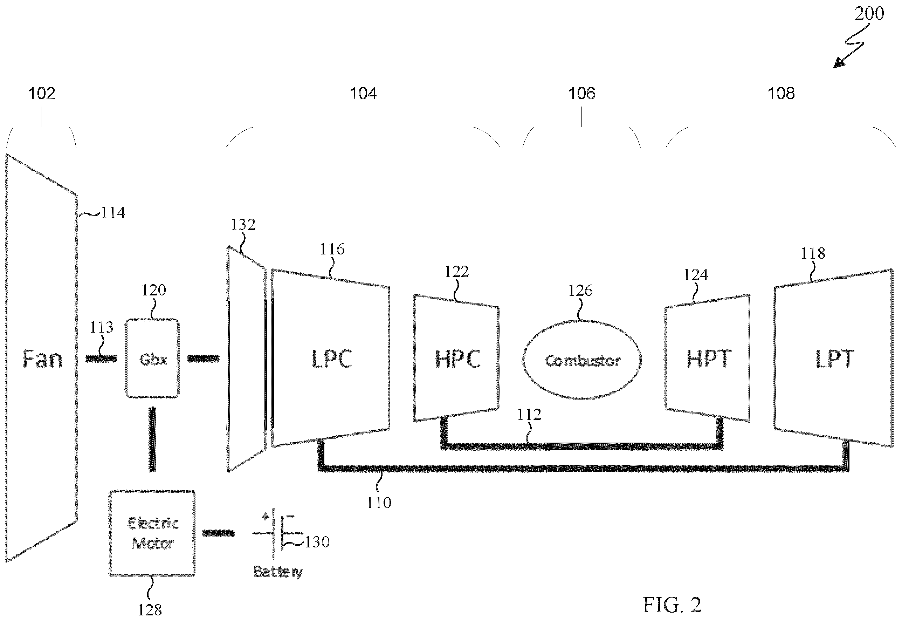

FIGURE 1 illustrates an example gas turbine engine 100 in accordance with this invention. FIGURE 2 illustrates an example hybrid gas turbine-electric engine 200 in accordance with this invention.

As shown in FIGURES 1 and 2, gas turbine engine 100 and hybrid gas turbine-electric engine 200 are disclosed as three-shaft turbofans that generally incorporate a fan section 102, a compressor section 104, a combustor section 106, and a turbine section 108. Alternative engines might include an augmentor section among other systems or features. The fan section 102 drives air along a bypass flow path in a bypass duct defined within a nacelle, while the compressor section 104 drives air along a core flow path for compression and communication into the combustor section 106 then expansion through the turbine section 108. Although depicted as a three-shaft turbofan gas turbine engine in the disclosed non-limiting embodiment, it should be understood that the concepts described herein are not limited to use with three-shaft turbofans as the teachings may be applied to other types of turbine engines including three-shaft architectures and geared turbofan architectures. Alternate propulsors to an enclosed fan section 102 may be a propellor or open-rotor fan.

The gas turbine engines 100 and 200 generally include a low-speed shaft 110, a high-speed shaft 112, and an electric compressor stage shaft 111 and 113 mounted for rotation about an engine central longitudinal axis relative to an engine static structure via several bearing systems. It should be understood that various bearing systems at various locations may be provided.

The low-speed shaft 110 generally includes an inner shaft that interconnects a fan 114, a first (or low) pressure compressor 116, and a first (or low) pressure turbine 118. The low-speed shaft 110 is connected to the fan 114 through a speed change mechanism (such as a gear box 120), which in the gas turbine engines 100 and 200 are illustrated with geared architecture to drive the fan 114 at a lower speed than the low-speed shaft 110. The high-speed shaft 112 includes an outer shaft that interconnects a second (or high) pressure compressor 122 and a second (or high) pressure turbine 124. A combustor 126 is arranged in the gas turbine engines 100 and 200 between the high-pressure compressor 122 and the high-pressure turbine 124. In some examples, a mid-turbine frame of the engine static structure is arranged generally between the high-pressure turbine 124 and the low-pressure turbine 118. The mid-turbine frame further supports bearing systems within the turbine section 108. The low-speed shaft 110 and the high-speed shaft 112 are concentric and rotate via bearing systems about the engine central longitudinal axis A, which is collinear with the longitudinal axes of the low-speed shaft 110 and the high-speed shaft 112. The low-pressure compressor 116, the low-pressure turbine 118, the high-pressure compressor 122, and the high-pressure compressor 124 may contain multiple stages.

As shown in FIGURE 1, the electric compressor stage shaft 111 can be operably coupled to an electric compressor stage 132. The electric compressor stage shaft 111 includes an outer shaft arranged around the low-speed shaft 110. The electric compressor stage shaft 111 can be driven by an electric motor 128. The electric compressor stage shaft 111 can be only connected between the electric motor 128 and the electric compressor stage 132.

As shown in FIGURE 2, the electric compressor stage shaft 113 can be operably coupled to an electric compressor stage 132 and the fan 114, where the fan is not directly connected to the low-speed shaft 110 or connected to the low-speed shaft through the electric compressor stage shaft 113 and gear box 120. The electric compressor stage shaft 113 includes an outer shaft arranged around the low-speed shaft 110. The electric compressor stage shaft 113 can be driven by an electric motor 128. The electric compressor stage shaft 113 can be only connected to the electric motor 128, the electric compressor stage 132, and the fan 114.

As shown in FIGURES 1 and 2, the core airflow is compressed by the low-pressure compressor 116 then the high-pressure compressor 122, mixed and burned with fuel in the combustor 126, then expanded over the high-pressure turbine 124 and low-pressure turbine 118. The turbines 118 and 124 rotationally drive the respective low-speed shaft 110 and high-speed shaft 112 in response to the expansion. It will be appreciated that each of the positions of the fan section 102, compressor section 104, combustor section 106, turbine section 108, and gear box 120 may be varied. For example, gear box 120 may be located aft of combustor section 106 or even aft of turbine section 108, and fan section 102 may be positioned forward or aft of the location of gear box 120.

In certain embodiments, the engines 100 and 200 can be high-bypass geared aircraft engines. In a further example, the engines 100 and 200 bypass ratio can be greater than about six (6), with an example embodiment being greater than about ten (10), the gear box 120 can be an epicyclic gear train, such as a planetary gear system or other gear system, with a gear reduction ratio of greater than about 2.3 and the low-pressure turbine 118 has a pressure ratio that is greater than about five. In certain embodiments, the engines 100 and 200 bypass ratio can be greater than about 10:1 (although other ratios like those up to about 100:1 or more may be used), the fan diameter is significantly larger than that of the low-pressure compressor 116, and the low-pressure turbine 118 has a pressure ratio that is greater than about five (5:1). Low-pressure turbine pressure ratio is pressure measured prior to the inlet of the low-pressure turbine 118 as related to the pressure at the outlet of the low-pressure turbine 118 prior to an exhaust nozzle. The gear box 120 may be an epicyclic gear train, such as a planetary gear system or other gear system, with a gear reduction ratio of greater than about 2.3:1. It should be understood, however, that the above parameters are only examples of one embodiment of a geared architecture engine and that the concepts of this invention are applicable to other gas turbine engines including direct drive turbine engines.

In some examples, an electric motor 128 is incorporated into the engines 100 and 200 and is capable of generating rotational power using electricity provided by an electric energy source, such as a battery 130. In some examples, a motor/generator can be utilized as the electric motor 128 and electric energy can be generated by rotational energy from the low-speed shaft 110. In such an example, the electric energy can be provided to a power distribution system, or otherwise stored in the battery 130.

Further, the presence of the electric motor 128 allows the engines 100 and 200 to be undersized relative to the thrust requirements during a takeoff operation and/or a climb out operation. In such an example, a geometry of the engines 100 and 200 can be physically sized such that a turbine inlet temperature of the high-pressure turbine 124 is at the maximum allowable temperature for climb while engines 100 and 200 are at the maximum thrust cruise condition. Alternatively, a flow rate through the engines 100 and 200 can be configured to be controlled by a controller such that a turbine inlet temperature of the high-pressure turbine 124 is at a maximum while the engines 100 and 200 are in the cruise mode of operation.

While illustrated in the example of FIGURE 1 as being positioned in front of the low-pressure turbine 118, one of skill in the art, having the benefit of this disclosure, will understand that the electric motor 128 can be placed at alternative axial positions within the gas turbine engines 100 and 200, and provide similar functions.

Gas turbine engines operate over a large range of power settings, partial power to full power, with each power setting having a different fuel efficiency. The power settings may alternately be referred to as modes of operation. By way of example, one operational mode during which the engines 100 and 200 operates at a high power is while the aircraft is taking off. This mode is referred to as a takeoff mode of operation.

In the engines 100 and 200 of FIGURES 1 and 2, the electric motor 128 is configured to generate electric power during at least one mode of engine operation. By way of example, the generator can be configured to generate electricity during the cruise mode of operation. The energy generated during this mode can be stored in an energy storage system, such as a battery 130, supercapacitor, or the like, and utilized in later engine operations where the engine is either turned off, or is operating at insufficient levels to operate environmental, and similar aircraft systems. In this example, the generated electricity can be used to power supplemental components, such as an electric air compressor, to operate aircraft systems while the engines 100 and 200 are providing insufficient bleed air to operate the aircraft systems.

With reference again to the engines 100 and 200 illustrated in FIGURE 1, the compressor section 104, the combustor section 106 and the turbine section 108 form what is referred to as the engine core. The primary flow path flows through the engine core and provides the necessary air for engine operations. Further, by using electric energy generated by the electric motor 128 to power aircraft systems, such as environmental control systems, the operation of the aircraft systems can be de-coupled from the operation of the engines 100 and 200 during at least some modes of operation.

An electric compressor stage 132 can be operated together and independently of the low-pressure compressor 116 and/or the high-pressure compressor 122. When run independently, the electric compressor stage 132 can be powered by an electric system by means of an electric motor 128 and gear box 120 and driven by the electric compressor stage shaft 111. The electric compressor stage 132 can be used as an engine starter providing a minimum air mass flowrate for ignition. The electric compressor stage 132 can also be actively controlled by an engine controller, such as a full authority digital engine (or electronics) control (FADEC), electric engine controller (EEC), and/or the like, for different flight stages, including a low idle during electric-only flight conditions.

Operating in this manner can allow for an engine to be started directly from a battery 130 or ground cart power using the air flow provided by the electric compressor stage 132 during a ground start. An electric compressor stage 132 can be run prior to an engine start to act as a centrifugal dust removal stage prior to taking bleed air for cooling flows.

During normal gas turbine operation, the electric compressor stage 132 can be engaged with the low-speed shaft 110 by means of a clutch and operate as a traditional first stage compressor driven by the engine. The electric compressor stage 132 can also be actively run by electric power providing an additional means to maintain optimal core airflow during all flight stages by the FADEC. The electric compressor stage 132 can also be used to start an engine using only electric power during flight.

During an electric-only operation of the aircraft, the electric compressor stage 132 can maintain a constant flow rate to keep the combustor lit. This would allow functionality similar to a pilot light for the engine to avoid the need for in-flight starting. In some embodiments, the electric compressor stage 132 can be controlled independently of the low-pressure compressor 116, the low-pressure turbine 118, the high-pressure compressor 122, and the high-pressure turbine 124 by engine control software to provide an additional means for maintaining optimal core airflow during all flight stages and engine operations. Independent control of the electric compressor stage 132 can allow for better design of the low-pressure compressor 116, the low-pressure turbine 118, the high-pressure compressor 122, and the high-pressure turbine 124 for more efficient operation of the engine to minimize weight and cost, and to increase durability.

Although FIGURE 1 illustrates an example gas turbine engine 100 and FIGURE 2 illustrates an example hybrid gas turbine-electric engine 200 in accordance with this invention, various changes may be made to FIGURES 1 and 2. For example, the various components in FIGURES 1 and 2 may be combined, further subdivided, replicated, omitted, or rearranged and additional components may be added according to particular needs. In particular, the electric compressor stage 132 can be incorporate into a stage of the low-pressure compressor 116 or the high-pressure compressor 122.

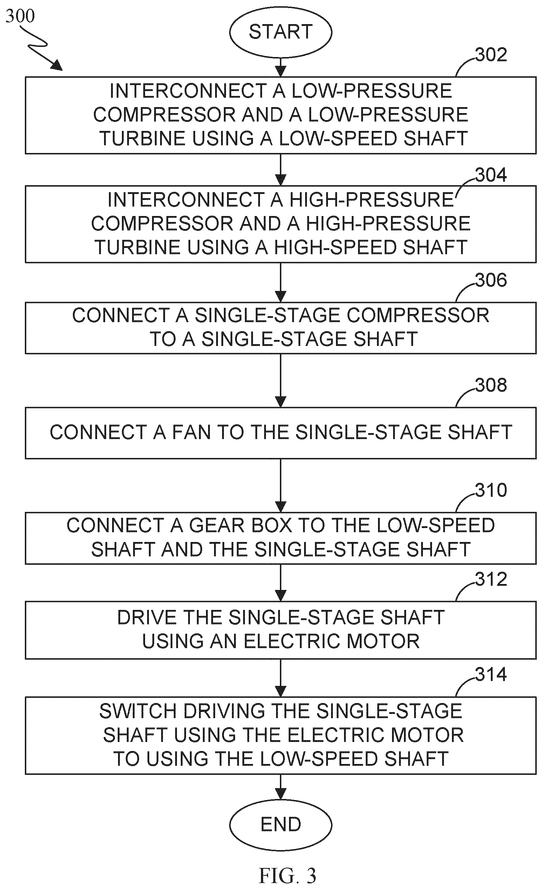

FIGURE 3 illustrates an example method 300 for operating a hybrid gas turbine-electric engine according to this invention. For ease of explanation, the method 300 of FIGURE 3 is described as being performed using the gas turbine engine 100 of FIGURE 1. However, the method 300 may be used with any other suitable system and any other suitable gas turbine engine, such as hybrid gas turbine-electric engine 200.

As shown in FIGURE 3, the gas turbine engine 100 interconnects a low-pressure compressor 116 and a low-pressure turbine 118 using a low-speed shaft 110 at step 302. The low-pressure compressor 116 can operate with the low-pressure turbine 118 when the low-speed shaft 110 is driven. The low-speed shaft 110 can be driven by a motor. The low-speed shaft 110 can be connected to a gear box 120.

The gas turbine engine 100 interconnects a high-pressure compressor 122 and high-pressure turbine 124 using a high-speed shaft 112 at step 304. The high-pressure compressor 122 can operate with the high-pressure turbine 124 when the high-speed shaft 112 is driven. The high-speed shaft 112 can be arranged around and in-line with the low-speed shaft 110. The high-speed shaft 112 can be driven by the same motor as the low-speed shaft 110 or a different motor. The high-speed shaft 112 may be shorter than the low-speed shaft 110.

The gas turbine engine 100 connects an electric compressor stage 132 to an electric compressor stage shaft 111 at step 306. The electric compressor stage 132 can operate when the electric compressor stage shaft 111 is driven. The electric compressor stage shaft 111 can be arranged around and in-line with the low-speed shaft 110. In certain embodiments, the electric compressor stage shaft 111 can be arranged within the high-speed shaft 112 or around the high-speed shaft 112. In certain embodiments, the electric compressor stage shaft 111 can be arranged around a portion of the low-speed shaft 110 that extends past an end of the high-speed shaft 112. The electric compressor stage 132 may be the only compression stage connected to the electric compressor stage shaft 111.

The gas turbine engine 100 optionally connects a fan 114 to the electric compressor stage shaft 113 at step 308. In certain embodiments, the fan 114 can operate with the electric compressor stage 132 when the electric compressor stage shaft 113 is driven. In certain embodiments, the fan 114 is connected to the low-speed shaft 110.

The gas turbine engine 100 connects a gear box 120 to the low-speed shaft 110 and the electric compressor stage shaft 111 at step 310. In certain embodiments, the gear box 120 can be connected to the electric compressor stage shaft 111 between the fan 114 and the electric compressor stage 132 and the low-speed shaft 110. In certain embodiments, the gear box 120 is connected to the low-speed shaft 110 and an end of the single-stage shaft 111 opposite to the electric compressor stage 132. The gear box 120 can switch driving of the single-stage shaft 111 between an electric motor 128 and the low-speed shaft 110.

The gas turbine engine 100 drives the electric compressor stage shaft 111 using an electric motor 128 to using the low-speed shaft 110 at step 314. The electric motor 128 can be powered by a battery 130. When the gas turbine engine 100 first starts, the gear box 120 can transfer a driving force from the electric motor 128 to the electric compressor stage shaft 111.

The gas turbine engine 100 uses the gear box 120 to switch from (i) the electric motor 128 driving the electric compressor stage shaft 111 to (ii) the low-speed shaft 110 driving the electric compressor stage shaft 111 at step 312. Once the air flowing through the gas turbine engine 100 at a quick enough speed or enough time has passed, the gear box 120 can switch driving of the electric compressor stage shaft 111 to the low-speed shaft 110. For the rest of the operation, the electric compressor stage 132 can operate with the low-pressure compressor 116.

Although FIGURE 3 illustrates one example of a method 300 for operating a hybrid gas turbine-electric engine, various changes may be made to FIGURE 3. For example, while shown as a series of steps, various steps in FIGURE 3 may overlap, occur in parallel, or occur any number of times.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. A gas turbine engine (100;200) comprising:
a compressor section (104) including a low-pressure compressor (116), a high-pressure compressor (122), and an electric compressor stage (132);
a turbine section (108) including a low-pressure turbine (118) and a high-pressure turbine (124);
a low-speed shaft (110) interconnecting the low-pressure compressor (116) and the low-pressure turbine (118);
a high-speed shaft (112) interconnecting the high-pressure compressor (122) and the high-pressure turbine (124);
an electric compressor stage shaft (111;113) connected to the electric compressor stage (132); and
an electric motor (128) configured to drive the electric compressor stage shaft (111; 113).

2. The gas turbine engine (100) of claim 1, wherein the electric compressor stage shaft (111) is decoupled from the low-pressure compressor (116).

3. A gas turbine engine (100;200) comprising:
a compressor section (104) including a high-pressure compressor (122) and a low-pressure compressor (116), the low-pressure compressor including a first low-pressure compression stage (132) and a second low-pressure compression stage (116);
a turbine section (108) including a low-pressure turbine (118) and a high-pressure turbine (124);
a low-speed shaft (110) interconnecting the second low-pressure compression stage (116) and the low-pressure turbine (118);
a high-speed shaft (112) interconnecting the high-pressure compressor (122) and the high-pressure turbine (124);
an electric compressor stage shaft (111; 113) connected to the first low-pressure compression stage (132); and
an electric motor (128) configured to drive the electric compressor stage shaft (111; 113).

4. The gas turbine engine (100;200) of claim 3, wherein the electric compressor stage shaft (111;113) is decoupled from the second low-pressure compression stage (116).

5. The gas turbine engine (200) of claim 1 or 3, further comprising a fan (114) connected to the electric compressor stage shaft (113).

6. The gas turbine engine (200) of claim 5, further comprising a gear box (120) connected to the low-speed shaft (110) and the fan (114) via the electric compressor stage shaft (113).

7. The gas turbine engine (200) of claim 6, wherein the gear box (120) is configured to switch between (i) the electric motor (128) driving the electric compressor stage shaft (113) and (ii) the low-speed shaft (110) driving the electric compressor stage shaft (113).

8. The gas turbine engine (100;200) of any preceding claim, wherein the electric compressor stage shaft (111;113) is decoupled from the high-pressure compressor (122).

9. A method comprising:
interconnecting a low-pressure compressor (116) and a low-pressure turbine (118) using a low-speed shaft (110);
interconnecting a high-pressure compressor (122) and a high-pressure turbine (124) using a high-speed shaft (112);
connecting an electric compressor stage (132) to an electric compressor stage shaft (111;113); and
driving the electric compressor stage shaft (11;113) using an electric motor (128).

10. The method of claim 9, wherein the electric compressor stage shaft (111) is decoupled from the low-pressure compressor (116).

11. The method of claim 9, further comprising connecting a fan (114) to the electric compressor stage shaft (113).

12. The method of claim 11, further comprising connecting a gear box (120) to the low-speed shaft (110) and the fan (114) via the electric compressor stage shaft (113).

13. The method of claim 12, further comprising switching the gear box (120) between (i) the electric motor (128) driving the electric compressor stage shaft (113) and (ii) the low-speed shaft (110) driving the electric compressor stage shaft (113).

14. The method of any of claims 9 to 13, wherein the electric compressor stage shaft (111;113) is decoupled from the high-pressure compressor (122).

15. The method or gas turbine engine of any preceding claim, wherein the electric motor (128) does not drive the low-speed shaft (110) or the high-speed shaft (112).
